# EUROPÄISCHE PATENTANMELDUNG

(11) **EP 1 726 420 A2**
(43) Veröffentlichungstag der Anmeldung: **29.11.2006**
(21) Anmeldenummer: 06114487.9
(22) Anmeldetag: 24.05.2006
(51) Int. Cl.: B28B 3/26, B28B 11/08, B28B 17/00

(54) **Mundstück für eine Schneckenpresse zur Herstellung von Hochlochziegeln**

(30) Priorität: 25.05.2005 AT 8992005
(71) Anmelder: Zipfinger Mechatronik GmbH, 3363 Amstetten-Neufurth (AT)
(72) Erfinder: Zipfinger, Ing., Erwin, 3363, Neufurth (AT)
(74) Vertreter: Müllner, Erwin

(57) **Zusammenfassung**

Ein Mundstück (3) für eine Schneckenpresse (1) zur Herstellung von Hochlochziegeln umfasst ein Gestell (5) mit Kernstangen (6) in Produktionsrichtung, die Kerne (7) tragen. Diese formen die Löcher im Ziegel. Randseitig sind im Mundstück (3) den Durchtrittsquerschnitt verengende Pressplatten (9) vorgesehen, die die Kerne (7) einschließen und die Außenkontur definieren. Mindestens einer der Pressplatten (9) ist in der Produktionsebene (15), die von der Ebene des engsten Querschnitts an der Stirnseite der Kerne (7) gebildet ist, ein Rotationskörper (10, 11), wie z.B. eine Prägewalze vorgelagert. Die Mantelfläche des Rotationskörpers (10, 11) ist mit Vorsprüngen, Zähnen oder Prägestempeln (12) bestückt, die die Stirnkante (12) der Pressplatte (9) überragen. Die Drehachse der Rotationskörper (10, 11) liegt in der formgebenden Produktionsebene (15). Die Rotationskörper (10, 11) sind vorzugsweise paarweise einander gegenüberliegend angeordnet und allenfalls gebremst. In den Kernen (7) können als Rotationskörper Sternräder (18) vorgesehen sein, die den Kernquerschnitt bei Drehung überragen. Dadurch werden die Außenwandstärken wie auch die Stegwandstärken des Hochlochziegels variiert.

## Beschreibung

### Technisches Gebiet

Die Erfindung betrifft ein Mundstück für eine Schneckenpresse zur Herstellung von Hochlochziegeln, mit von einem Gestell in Produktionsrichtung auskragenden Kernstangen, die jeweils am freien Ende sich konisch erweiternde Kerne tragen, deren beispielsweise rechteckige Querschnitte in der die Produktionsebene bildenden Ebene des kleinsten Mundstückquerschnittes den Lochquerschnitten der Ziegel entsprechen und deren Abstände zueinander die Stege der Ziegel bilden, und ferner mit gegebenenfalls mehrteiligen querschnittsverengenden Pressplatten, die sämtliche Kerne z.B. in rechteckiger Pyramidenform mit einem Abstand zur Formung der Ziegelaußenwand einschließen.

### Stand der Technik

Hochlochziegel werden im Strangpressverfahren hergestellt. Eine silikatische Masse wird mittels einer Schneckenpresse einem Mundstück zugeführt, das einerseits durch die randseitigen querschnittsverengenden Pressplatten die Außenkontur des Stranges festlegt und das mittels der Kerne die Lochstruktur des Hochlochziegels ausbildet. Solche Ziegel müssen einerseits die erforderliche Festigkeit und Tragfähigkeit aufweisen. Sie sollen aber anderseits wärmeisolierend ausgebildet sein. Dazu erscheint es zweckmäßig, die Querschnitte der Außenwände wie auch der Stege innerhalb der Lochstruktur des Ziegels möglichst dünn auszubilden. Dem steht die Forderung nach Festigkeit und Tragfähigkeit entgegen. Zur Reduktion der Wärmeleitung genügt es, die Außenwände und die Stege eines Ziegels örtlich, also nicht durchgehend zu schwächen bzw. die Stege im Inneren allenfalls über kurze Distanzen zu unterbrechen.

Es sind Mundstücke bekannt, aus deren Kernen über Gestänge gesteuerte Schieber in den Zwischenraum zum nächsten Kern ein- und ausschiebbar sind. Auf diese Weise ist es möglich, beim Strangpressen die zwischen den Kernen gebildeten Stege örtlich zu unterbrechen. Natürlich ist der Aufwand für eine solche Schiebersteuerung mit Gestänge nächst der Produktionsebene groß und zudem ist die gesamte Konstruktion störungsanfällig. Wenn der Massefluss durch quer laufende Steuerstangen im Mundstück beeinflusst wird, muss mit einem Qualitätsverlust gerechnet werden.

Unabhängig vom Gedanken einer Reduktion der Wärmeleitfähigkeit ist es bei stranggepressten Ziegeln bekannt, eine Kennung wie auch ein Muster an den Außenflächen einzuprägen. Dazu wird der Ziegelstrang im Anschluss an das formgebende Mundstück noch über Walzen geführt, die somit außerhalb der Produktionsebene liegen. Es ist ferner auch bekannt, zum Aufdruck Stempelplatten zu verwenden.

Beim Strangpressen von Hochlochziegeln tritt ferner noch das Problem der unterschiedlichen Massegeschwindigkeiten über den Querschnitt auf. Die Kerne im Mundstück bewirken einen Fließwiderstand, der randseitig an den Pressplatten geringer ist. Um hier ausgleichend einzuwirken, werden daher die Pressplatten oder andere Randleisten gegen den Massestrom vorgeschoben, bis ein gleichmäßiger Massefluss über den Querschnitt erreicht ist. Temperatur, Drehzahl der Schneckenpressen und Konsistenz der Masse sind Parameter, die unter anderem den Massefluss verändern.

### Darstellung der Erfindung

### Technische Aufgabe

Die Erfindung zielt darauf ab, die Wärmeleitfähigkeit eines Hochlochziegels herabzusetzen und dazu ein Mundstück der einleitend beschriebenen Art zu schaffen.

### Technische Lösung

Dieses ist dadurch gekennzeichnet, dass vor mindestens einer der Pressplatten ein Rotationskörper, wie z. B. eine Prägewalze vorgesehen ist, die an der Mantelfläche Vorsprünge, Zähne oder Prägestempel aufweist, welche bei Drehung die formgebende Kontur der Pressplatte in der Produktionsebene überragen und dass die Drehachse des Rotationskörpers in der Produktionsebene liegt.

### Vorteilhafte Wirkungen

Der Rotationskörper kommt somit genau dort zur Wirkung, wo der Querschnitt des Hochlochziegels aus der silikatischen Masse geformt wird, nämlich in der Ebene des kleinsten Mundstückquerschnittes. Exakt zugleich mit den Löchern im Ziegel wird die Außenwand bzw. werden zwei oder alle vier Außenwände des Ziegels strukturiert. Dazu ist der oder sind die Rotationskörper walzenförmig ausgebildet und zeigen auf der Mantelfläche z.B. warzen- oder noppenartige Vorsprünge, die die Wandstärke der Außenwand bzw. Außenwände örtlich verringern. Es können also etwa kreiszylindrische Einprägungen eng nebeneinander ausgeführt werden, deren Boden jeweils die Wandstärke der Ziegelwand örtlich auf die Hälfte, allenfalls bis zu einem Zehntel reduziert. Natürlich können auch andere geometrische Figuren bzw. Körper zur Ausprägung von Vertiefungen eingesetzt werden. Der volle Querschnitt bleibt nur in einem Gitterwerk erhalten, das für die Festigkeit maßgebend ist. Durch die Querschnittsverengungen wird das Isolationsverhalten des Hochlochziegels verbessert.

Um eine bessere Verbindung in der Art einer Feder- und Nutverbindung von Ziegel zu Ziegel zu erhalten, kann der Ausbildung von Einprägungen eine Abstufung überlagert sein.

Dazu ist es zweckmäßig, wenn der Rotationskörper in axialer Richtung als Stufenwalze ausgebildet ist und wenn die Bereiche unterschiedlicher Durchmesser mit unterschiedlichen Umfangsgeschwindigkeiten drehbar sind. Die einzelnen Scheiben oder Zylinder, die die Stufenwalzen bilden, können über Planetengetriebe im Inneren miteinander gekuppelt sein, um die Umfangsgeschwindigkeit anzupassen. Eine andere Ausbildungsform sieht vor, dass der oder die Rotationskörper im Querschnitt, also in radialer Richtung, abgestufte Walzendurchmesser zur Ausbildung von in ihrer Länge begrenzten Nuten oder Rippen in Produktionsrichtung aufweisen. In diesem Fall wird man die parallel liegenden Rotationskörper in der Drehlage und der Winkelgeschwindigkeit synchronisieren, damit entstehende Rippen auf der einen Seite des Hochlochziegels in ihrer Lage genau in die Nuten auf der anderen Seite eines anschließenden Ziegels hineinpassen. Es ist ferner zweckmäßig, wenn die als Walzen ausgebildeten Rotationskörper einander in der Produktionsebene, in der die Stirnflächen der Kerne angeordnet sind, paarweise gegenüberliegen und den Mundstückquerschnitt begrenzen. Die Walzen umgeben somit das Mundstück seitlich bzw. rahmenartig und definieren die äußere Formgebung des Stranges genau in der Ebene, in der die Stirnflächen der Kerne für die Löcher des Hohllochziegels liegen. Es ist wesentlich, dass die innere und äußere Formgebung gleichzeitig erfolgt, damit keine Rückwirkungen entstehen. Durch nachgeschaltete Walzen würde man das Lochbild zumindest randseitig verändern und auch keine wirksame Wandstärkeveränderung der Außenwände erreichen.

In einer besonderen Weiterbildung der Erfindung sind die die Außenkontur des Hochlochziegels bestimmenden Rotationskörper, insbesondere die den Mundstückquerschnitt begrenzenden vier Walzen, zur Sicherung des Gleichlaufs durch Zahnräder, Kegelräder oder Zahnrad- bzw. Kegelradgetriebe miteinander kinematisch verbunden. Es passen dann fluchtend aneinander anschließende Ziegel im Verbund formschlüssig zusammen.

Ein weiterer Vorteil einer paarweisen Anordnung der Rotationskörper ergibt sich, wenn mindestens ein Walzenpaar jeweils eine einstellbare Bremse für die Drehung aufweist. Durch entsprechende Einstellung der Bremskraft wird die Austrittsgeschwindigkeit der Masse im Randbereich des Stranges gebremst und so über den ganzen Querschnitt vereinheitlicht. Dadurch entfallen innere Spannungen, die sich insbesondere beim Trocknen durch Rissbildung nachteilig auswirken könnten. Im Hinblick darauf, dass die über den Querschnitt des Massestranges ohne randseitiger Bremsung unterschiedlichen Massegeschwindigkeiten von einer Vielzahl ständig variabler Parameter abhängen, ist es zweckmäßig, wenn ein Sensor zur Erfassung der Differenz der Austrittsgeschwindigkeit zwischen Rand und Mittelbereich der Ziegelmasse vorgesehen ist und wenn eine Steuerung die Walze bzw. die Walzen auf die Austrittsgeschwindigkeit im Mittelbereich der Ziegelmasse abbremst. So kann eine stets gleichmäßige Austrittsgeschwindigkeit über den Querschnitt erreicht werden. Als Sensoren kommen seitliche Geberrädchen in Frage, die im Abstand zum Mundstück die Vorschubgeschwindigkeit des Massestranges ermitteln und mit der Austrittsgeschwindigkeit vergleichen. Aus einer allfälligen Differenz wird die Bremskraft auf die allseitig angeordneten (vier) Walzen im Mundstück ermittelt, mit dem Ziel, die beiden Geschwindigkeiten im Mundstück und im Abstand davor anzugleichen. Natürlich könnte man auch die Strömungsgeschwindigkeit im Inneren des Hochlochziegels also z.B. in der Mitte des Mundstückes und am Rand messen. Dazu kann ein Messrädchen mit Permanentmagneten im Massestrom und ein Hallsensor als Empfänger am Rahmen des Mundstückes eingesetzt werden. Die Vergleichsschaltung steuert die Bremsen je Walze nach einer Steuerkurve.

Um die Wände nicht nur außen, sondern auch die Stege im Inneren des Hochlochziegels in der Wandstärke zu variieren, ist es zweckmäßig, wenn in mindestens einigen der Kerne mit Rechteckquerschnitten in der Produktionsebene seitlich nächst der Stirnseite Ausnehmungen vorgesehen sind, in welchen die z.B. als Sternräder ausgebildeten Rotationskörper gelagert sind, wobei die am Umfang angeordneten Vorsprünge oder Arme der Sternräder bei Drehung den Kernquerschnitt in der Produktionsebene überragen und periodisch vergrößern bzw. verkleinern und damit die Stegquerschnitte im Ziegel verändern. Je nach Anordnung und Ausbildung der Sternräder, die Drehkreuzen entsprechen, können auch Masseflüsse zwischen zwei Kernen kurzzeitig unterbrochen werden. Damit wird ein Wärmeübergang gänzlich unterbunden.

Eine besondere Ausbildungsform ist dadurch gekennzeichnet, dass die Vorsprünge, Zähne bzw. Prägestempel an den als Walzen oder Sternräder ausgebildeten Rotationskörpern im Querschnitt Evolventenkonturen im Sinne eines Abrollens einer Verzahnung aufweisen. Beim Ein- und insbesondere Austauchen aus der zu formenden Ziegel masse nimmt diese Konturform auf den Vorschub Rücksicht. Es wird dadurch beispielsweise verhindert, dass Masse bei der Formgebung bei der Rollbewegung aus dem Rand der Einformung herausgerissen wird. Die Rotationskörper, also Walzen oder Sternräder sind antriebslos drehbar und mit der extrudierten Ziegelmasse mitdrehend gelagert. Dadurch erfordert das Mundstück keinerlei Antriebsaggregat und ist einfach im Aufbau.

### Kurze Beschreibung der Zeichnungen

Ein Ausführungsbeispiel ist in den Zeichnungen dargestellt.

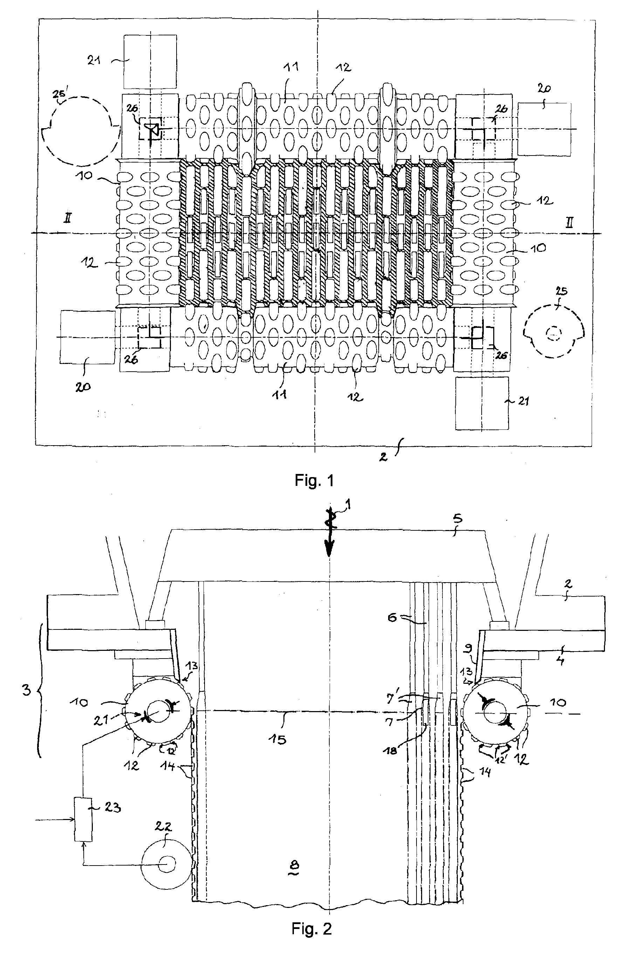

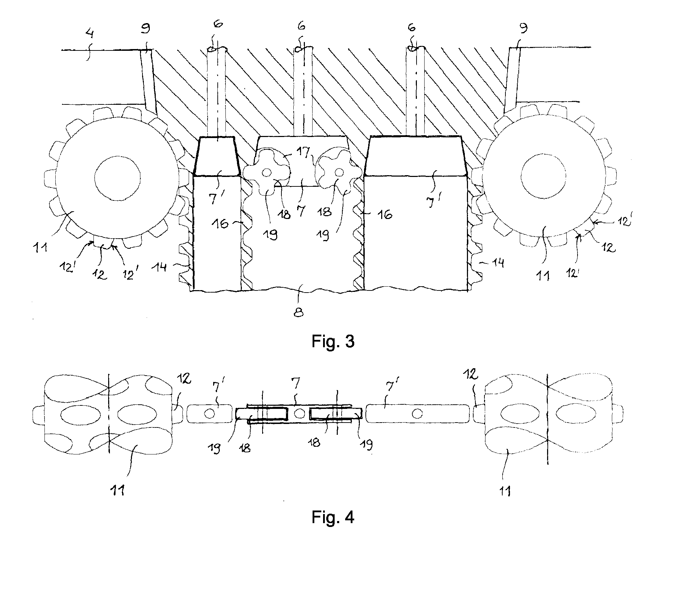

Fig. 1 zeigt eine Ansicht eines Mundstückes gemäß der Erfindung mit einem Ziegelstrang im Querschnitt, Fig. 2 einen Schnitt nach der Linie II-II in Fig. 1 ohne Schraffur, Fig. 3 als Detail eine Prinzipdarstellung von Kernen in Seitenansicht und Fig. 4 die Kerne nach Fig. 3 in Frontansicht.

### Weg(e) zur Ausführung der Erfindung

Am Austrittsende einer Schneckenpresse 1 ist ein flanschähnlicher Presskopf 2 vorgesehen, der mit unterschiedlichen Mundstücken, wie beispielsweise mit einem erfindungsgemäßen Mundstück 3, bestückt werden kann. Dieses umfasst auf einer rahmenartigen Grundplatte 4 ein in das Innere des Presskopfes 2 gerichtetes Gestell 5 (Fig. 2), das die Öffnung in der Grundplatte 4 ähnlich einem Gitter überbrückt. Das Gestell 5 trägt in Pressrichtung (siehe Pfeil, der die Schneckenpresse 1 symbolisiert) auskragende Kernstangen 6, an deren stirnseitigen freien Enden jeweils ein Kern 7 befestigt ist. Diese Kerne 7 erzeugen die Löcher in der von der Schneckenpresse 1 durch das Mundstück 3 hindurch extrudierten silikatischen Masse. Letztere bildet einen Strang 8, der zu Hochlochziegeln geschnitten wird.

Die Außenwände bzw. die Außenabmessungen des Stranges 8 werden durch Pressplatten 9 bestimmt, die konisch zusammenlaufende Innenwände aufweisen und die querschnittsverengend auf den Strang 8 einwirken. Den Pressplatten 9 sind walzenähnliche, drehbar gelagerte Rotationskörper 10 in Pressrichtung so vorgelagert, dass die Mantelflächen der Rotationskörper 10 den engsten Querschnitt für den Strang 8 im Mundstück 3 bilden. Die Rotationskörper 10 liegen einander paarweise gegenüber (Fig. 1). Sie können gleich bleibende Walzendurchmesser aufweisen oder aber auch aus Teilen mit unterschiedlichen Durchmessern, wie etwa die Prägewalzen 11, zusammengesetzt sein.

Es ist auch möglich, die Rotationskörper 10 oder 11 mit im Querschnitt, also radial abgestuften Walzendurchmessern auszubilden. In Fig. 1 sind solche Querschnitte als abgestufte Walzendurchmesser 25 und 25' strichliert dargestellt. Sie stellen in ihrer Länge begrenzte Rippen oder Nuten her, die kürzer sind als die Gesamtlänge oder Breite des Ziegels und die im Verbund der Hochlochziegel eine Feder- und Nutverbindung ergeben. Eine Synchronisation der parallelen Rotationskörper 10 bzw. 11 mit solchen Walzendurchmessern 25, 25' nach gleicher Drehlage und Winkelgeschwindigkeit ist für das Ineinanderpassen im Ziegelverbund notwendig. Die Mantelflächen einiger oder aller Rotationskörper 10, 11 sind mit Vorsprüngen, Zähnen oder Prägestempeln 12 bestückt. Diese überragen die Stirnkanten 13 der Pressplatten 9 und prägen querschnittsverengende Ausnehmungen 14 in die Außenwände des Stranges 8 ein.

Es können auch alle vier Rotationskörper 10, 11 durch Zahnräder oder Getriebe 26 (Fig. 1) kinematisch miteinander verbunden sein. Auf diese Weise wird ein Gleichlauf erreicht und ferner kann die Zwangsverbindung sicherstellen, dass die Oberflächenstrukturen einander gegenüber liegender Wände zusammenpassen bzw. aufeinander abgestimmt sind.

Die Drehachsen der antriebslos mit dem austretenden Strang 8 mitdrehenden Rotationskörper 10 liegen in jener Ebene, welche die Stirnflächen der Kerne 7 verbindet. In dieser Ebene des geringsten Austrittsquerschnittes in Pressrichtung des Stranges 8 erfolgt die Formgebung des Hochlochziegels. Diese Ebene wird als formgebende Produktionsebene 15 bezeichnet. Sie ist in Fig. 2 strichliert dargestellt. Erwähnt sei, dass die Prägestempel 12 der Rotationskörper 10 infolge ihrer Wirksamkeit in der Produktionsebene 15 die silikatische Masse des Stranges 8 nicht nach innen durchdrücken, sondern dass diese Prägestempel 12 eine örtliche Querschnittsverengung der Außenwände bewirken. Dies ist in Fig. 2 bei dem aus dem Mundstück 3 herauslaufenden Strang 8 ersichtlich (Ausnehmungen 14).

Um ein Eintauchen und Austauchen der Prägestempel 12 in die fließende silikatische Masse ohne randseitige Rissbildung zu ermöglichen, sind die Einsatzflächen der Prägestempel 12 bzw. der Zähne oder Vorsprünge einer Evolventenverzahnung 12' nachgebildet.

Im Hinblick auf die unterschiedlichen Umfangsgeschwindigkeiten der im Durchmesser abgesetzten Prägewalzen 11 sind die einzelnen Abschnitte der Prägewalzen 11 unabhängig voneinander drehbar. Zwischen den einzelnen Kreiszylinderstücken der Prägewalze 11 können aber auch Planetengetriebe vorgesehen sein, die die Walzenstücke mit unterschiedlichen Umdrehungszahlen entsprechend koppeln.

Um auch die zwischen den Kernen 7 entstehenden Stege 16 (Fig. 3) im Strang 8 und sodann im Hochlochziegel in ihrer Stärke zu variieren und die Durchgangsquerschnitte örtlich zu schwächen, sind in Ausnehmungen 17 einiger oder aller Kerne 7 Sternräder 18 frei drehbar gelagert, deren Arme 19 bei Drehung den Kernquerschnitt in der Produktionsebene intermittierend überragen. Dadurch wird der Durchgang zwischen zwei Kernen 7, 7' periodisch vergrößert und verkleinert. Einerseits bleibt die Tragfähigkeit des Ziegels erhalten, anderseits wird der Wärmefluss entscheidend behindert und die Isolationswirkung wesentlich verbessert. Diese Sternräder 18 sind Rotationskörper mit am Umfang verteilten Zähnen als Arme 19; sie entsprechen etwa Zahnrädern. Die Arme 19 weisen Flanken in der Art einer Evolventenverzahnung auf, die ein harmonisches Ein- und Austauchen der Arme in die silikatische Masse ermöglicht, ohne Material herauszureißen oder Risse zu hinterlassen.

Infolge der durch das Lochbild und durch die Variation der Außenwand- und Stegquerschnitte hervorgerufenen unterschiedlichen Fließwiderstände der extrudierten Masse in der Produktionsebene 15 kommt es zu unterschiedlichen Fließgeschwindigkeiten im Strangquerschnitt. Dadurch können Spannungen und Risse im Hochlochziegel entstehen. So ist die Austrittsgeschwindigkeit der Masse im Randbereich größer als im Innenbereich des Ziegels. Um dem Effekt entgegenzuwirken, kann man örtlich Blenden strömungsbehindernd im Bereich der Pressplatten 9 in den Strömungskanal vom Rand her geringfügig einschieben, bis die Austrittsgeschwindigkeit der geformten Masse über den gesamten Querschnitt gleich ist. Die Anordnung der Rotationskörper 10, 11 insbesondere an allen vier Seiten des Massestromes ermöglicht es ferner, Bremsen 20, 21 jedem Rotationskörper 10, 11 zuzuordnen. Die austretende Masse kann so am Rand zurückgehalten werden, und zwar in dem Maße, dass die Austrittsgeschwindigkeit in der Produktionsebene 15 überall gleich groß ist. Dazu sind die (vier) Bremsen 20, 21 einstellbar. Es kann die Randgeschwindigkeit im Abstand vom Mundstück über eine Tastrolle als Sensor 22 (Fig. 2) gemessen und mit der Ist-Geschwindigkeit der Rotationskörper 10, 11 verglichen werden. Aus der Differenz ergibt sich in einer Steuerung 23 die Regelgröße für die Bremskraft der Bremsen 20, 21, mit dem Ziel, die Geschwindigkeitsdifferenz zu egalisieren.

Auch die Sternräder 18 können als Geschwindigkeitsmessgeber herangezogen werden. Dazu sind die Arme 19 eines etwa mittig im Querschnitt des Stranges 8 vorgesehenen Sternrades 18 mit Magneten bestückt und eine Hallsonde misst außerhalb der Mundstücksöffnung die Umdrehungen und damit die örtliche Strömungsgeschwindigkeit. Eine entsprechende Bremskraft der Bremsen 20, 21 kann die höhere randseitige Fließgeschwindigkeit des Stranges 8 abbremsen und an die innere Geschwindigkeit angleichen.

## Patentansprüche

1. Mundstück für eine Schneckenpresse zur Herstellung von Hochlochziegeln, mit von einem Gestell in Produktionsrichtung auskragenden Kernstangen, die jeweils am freien Ende sich konisch erweiternde Kerne tragen, deren beispielsweise rechteckige Querschnitte in der die Produktionsebene bildenden Ebene des kleinsten Mundstückquerschnittes den Lochquerschnitten der Ziegel entsprechen und deren Abstände zueinander die Stege der Ziegel bilden, und ferner mit gegebenenfalls mehrteiligen querschnittsverengenden Pressplatten, die sämtliche Kerne z.B. in rechteckiger Pyramidenform mit einem Abstand zur Formung der Ziegelaußenwand einschließen, **dadurch gekennzeichnet, dass** vor mindestens einer der Pressplatten (9) ein Rotationskörper (10, 11), wie z. B. eine Prägewalze vorgesehen ist, die an der Mantelfläche Vorsprünge, Zähne oder Prägestempel (12) aufweist, welche bei Drehung die formgebende Kontur der Pressplatte (9) in der Produktionsebene (15) überragen und dass die Drehachse des Rotationskörpers (10, 11) in der Produktionsebene (15) liegt.

2. Mundstück nach Anspruch 1, **dadurch gekennzeichnet, dass** der Rotationskörper (11) in axialer Richtung als Stufenwalze ausgebildet ist und dass die Bereiche unterschiedlicher Durchmesser mit unterschiedlichen Umfangsgeschwindigkeiten drehbar sind.

3. Mundstück nach den Ansprüchen 1 oder 2, **dadurch gekennzeichnet, dass** der oder die Rotationskörper (10, 11) im Querschnitt, also in radialer Richtung, abgestufte Walzendurchmesser (25, 25') zur Ausbildung von in ihrer Länge begrenzten Nuten oder Rippen in Produktionsrichtung aufweisen.

4. Mundstück nach einem der Ansprüche 1 bis 3, **dadurch gekennzeichnet, dass** die als Walzen ausgebildeten Rotationskörper (10, 11) einander in der Produktionsebene (15), in der die Stirnflächen der Kerne (7) angeordnet sind, paarweise gegenüberliegen und den Mundstückquerschnitt begrenzen.

5. Mundstück nach einem der Ansprüche 1 bis 4, **dadurch gekennzeichnet, dass** die die Außenkontur des Hochlochziegels bestimmenden Rotationskörper (10, 11), insbesondere bei den Mundstückquerschnitt begrenzenden vier Walzen, zur Sicherung des Gleichlaufs durch Zahnräder, Kegelräder oder Zahnrad- bzw. Kegelradgetriebe (26) miteinander kinematisch verbunden sind.

6. Mundstück nach einem der Ansprüche 1 bis 4, **dadurch gekennzeichnet, dass** mindestens ein Walzenpaar der Rotationskörper (10, 11) jeweils eine einstellbare Bremse (20', 21) für die Drehung aufweist.

7. Mundstück nach Anspruch 6, **dadurch gekennzeichnet, dass** ein Sensor (22) zur Erfassung der Differenz der Austrittsgeschwindigkeit zwischen Rand und Mittelbereich der Ziegelmasse des Stranges (8) vorgesehen ist und dass eine Steuerung (23) und die Bremsen (20, 21) die Walze bzw. die Walzen bzw. Rotationskörper (10, 11) auf die Austrittsgeschwindigkeit im Mittelbereich der Ziegelmasse abbremst.

8. Mundstück nach einem der Ansprüche 1 bis 7, **dadurch gekennzeichnet, dass** in mindestens einigen der Kerne (7) mit annähernd Rechteckquerschnitten in der Produktionsebene (15) seitlich nächst der Stirnseite Ausnehmungen (17) vorgesehen sind, in welchen die z.B. als Sternräder (18) ausgebildeten Rotationskörper gelagert sind, wobei die am Umfang angeordneten Vorsprünge oder Arme (19) der Sternräder (18) bei Drehung den Kernquerschnitt in der Produktionsebene (15) überragen und periodisch vergrößern bzw. verkleinern und damit die Stegquerschnitte im Ziegel verändern.

9. Mundstück nach einem der Ansprüche 1 bis 8, **dadurch gekennzeichnet, dass** die Vorsprünge, Zähne bzw. Prägestempel (12) an den Rotationskörpern (10, 11) bzw. Sternrädern (18) an den Flanken Evolventenkonturen im Sinne eines Abrollens einer Verzahnung aufweisen.

10. Mundstück nach einem der Ansprüche 1 bis 9, **dadurch gekennzeichnet, dass** die Rotationskörper (10, 11) antriebslos bzw. frei drehbar und mitdrehend mit der extrudierten Ziegelmasse des Stranges (8) gelagert sind.
